# EUROPEAN PATENT SPECIFICATION

(11) **EP 1 879 373 B1**
(45) Date of publication and mention of the grant of the patent: **10.08.2011**
(21) Application number: 07110362.6
(22) Date of filing: 15.06.2007
(51) Int. Cl.: H04N 1/32

(54) **System with automatic file name generation and method therefor**
System mit automatischer Generierung von Dateinamen und Verfahren dafür
Système avec une génération automatisée de noms de fichier et procédé correspondant

(30) Priority: 14.07.2006 JP 2006194178; 04.06.2007 JP 2007148118
(43) Date of publication of application: 16.01.2008
(73) Proprietor: Ricoh Company, Ltd., Tokyo 143-8555 (JP)
(72) Inventor: Uchiyama, Hiroaki, Tokyo 143-8555 (JP)
(74) Representative: Schwabe - Sandmair - Marx

(56) References cited:
- WO-A-00/51342
- WO-A-2006/028383
- JP-A- 2002 352 218
- JP-A- 2005 086 265
- US-A1- 2002 076 220
- US-A1- 2002 101 619
- US-A1- 2004 201 676
- US-B1- 6 657 661

## Description

Example embodiments of the present invention relate generally to a device, apparatus, method, system, computer program and product each capable of managing image data being captured, and more specifically to a device, apparatus, method, system, computer program and product each capable of assisting management of image data being captured by generating a file name or a folder name using related information relating to the image data.

Recently, an image capturing device, such as a digital still camera, is widely used in many applications. In addition to the personal use, in one example, the image capturing device may be used at a construction site for supervision. In another example, the image capturing device may be used at a disaster site for damage investigation or rescue planning. In another example, the image capturing device may be used at a medical institution for treatment of an injured or diseased part of a patient. In another example, the image capturing device may be used in a distribution or retail industry for product management.

In most cases, image data captured by the image capturing device needs to be associated with information relating to the image data or an object of the image data, which may be obtained at the time of capturing. For example, the Japanese Patent Application Publication No. 2004-357343 describes an electronic camera, which detects the name of a place at which an image is taken, and records the detected name of the place in a header of the image.

However, when storing the image data being captured, the image capturing device automatically assigns an arbitrary file name to the image data, for example, "R0000001.jpg". Since the assigned file name is not related to the content of the image data, a user is often required to open the image data using an appropriate software program to check for the content. Even when the file name of the image data may be displayed together with a thumbnail image of the image data, the user may not recognize the image data, such as when or where the image data was captured, by simply looking at the thumbnail image.

US-6,657,661 B1 describes a digital camera with GPS enabled file management and a device to determine direction. A digital system that uses a global positioning system GPS and a device to determine direction to help name the files and/or the file location of the images captured by the device can help manage the large number of files created by the device. The digital system contains a photo-sensor, an image storage area, a GPS system, a GPS database, a device to determine direction and a processor.

WO 2006/028383 A describes a method for providing and storing a digital picture acquired with a digital camera embodied on a mobile communication terminal comprising memory, sender and receiver connected to a base station, with a descriptive filename including information of the geographical location of where the picture was taken. This is achieved by sending a trigger signal from the mobile communication terminal initiating a request of location information to the base station when a picture is taken. Based on the mobile communication terminal's location, relevant geographical locations acquired from a map server is presented as suggestions to the user of the mobile communication terminal. The user of the mobile communication terminal chooses a location and a filename which is provided for the picture comprising the chosen location name. The picture will then be stored with a descriptive filename.

WO 00/51342 A describes methods and a system which provide means for labeling digital image data generated by digital imaging devices, such as digital cameras and camcorders, with descriptive information. In one embodiment, a menu of descriptive terms is displayed to the user of the digital imaging device. The user chooses one or more of the descriptive terms and the user's choices are associated with the digital image. The descriptive terms may be used, for example, to generate a file name or may be later displayed with the digital image.

US-2002/076220 A describes an image pickup apparatus. The image pickup apparatus, which is a device for recording an image file on a recording medium according to a file system having a plurality of directories including attributes associated with a photographing position of image data and a photographer, detects the photographing position of a photographed image data and the photographer and records the image file on the directory of the attributes corresponding to the detected photographing position and the photographer from among said plurality of directories.

JP 2005-086265 A describes a mobile terminal for simply managing an image data file obtained by imaging in an intuitionally handled manner by a user. A database means stores a database wherein positional information, a district name and a facility name are cross-referenced with one another, when an electronic imaging means carries out imaging by the operation of a key entry means, the database means searches the database on the basis of positional information measured by a positioning means at that time and particularizes the district name and the facility name at the imaging position. A control means captures the image data outputted from the electronic imaging means, applies prescribed processing to the image data, attaches the particularized district name and facility name or the like as file names to the image data, and stores the result in a memory means as an image data file. A desired image data file can be searched from the memory means by using the imaging location such as the district name and the facility name for a keyword.

JP 2002-352218 A describes a file name setting system, an electronic camera and an information processing device in order to set a file name to facilitate association of the file contents and to enable file management based on a photographic position, etc., from the file name. In this respect, positional data (latitude, longitude) are calculated from a receiving signal based on radio waves to be transmitted from a plurality of artificial satellites received by a GPS antenna in the case of photography, an area on map data indicated by the positional data are specified based on the positional data and the map data, a place name is acquired from pieces of information regarding the specified area and the acquired place name is set as the file name of image data in the case of the photography (for example, 'Oze.jpg'). In addition, when a file with the same name exists at a storage destination, the file name is changed by making increment numerals to be added to the end of a part except an extension of the file name.

US-2002/101619 A describes an image recording method and system, an image transmitting method and an image recording apparatus. An input apparatus reads a patient ID from an ID card and transmits it to a computer. On the basis of the patient ID, the computer obtains corresponding patient information containing a photograph of the patient's face and the patient's name, from a medical database, and then transmits the patient information to the digital camera together with the patient ID. The digital camera displays the patient information on the liquid crystal monitor to enable confirmation of the patient, who is a subject to be photographed. After the patient has been confirmed, the patient ID is filled in a header part of an image file for the image photographed using the digital camera, and the image file is transmitted to the medical database or the like. Thus, when identification information on the subject is recorded in connection with the photographed image, the input of the identification information is simplified, and the correspondence between the subject identification information input before photographing and the subject to be photographed can be easily confirmed. Further, the digital camera obtains locational information from a car navigation apparatus. The locational information is classified into added-to-image information added to the subject image (GPS information indicative of latitude, longitude, and altitude) and display information associated with the added-to-image information (the place name corresponding to the GPS information).The digital camera stores the location information obtained in a non-volatile memory and displays the display information (place name) of the locational information on the liquid crystal monitor of the camera. Subsequently, after photographing has been completed, the added-to-image information (GPS information) of the locational information stored in the non-volatile memory in connection with the image. Thus, if additional information input from an external device is recorded in connection with the subject image, the camera can be used to easily check what added-to-image information is used, whether or not the added-to-image information is correct as information to be added to the subject image, and the like.

### SUMMARY OF THE INVENTION

The invention is defined by the subject-matter of the independent claims. The dependent claims are directed to advantageous embodiments.

Advantageously, the present invention may be implemented in various other ways, for example, as a recording medium storing a plurality of instructions, which may cause any general-purpose computer to function as the above-described image capturing device or the image data management system.

### Summary of Comparative Examples

Advantageously, there are provided a device system or method capable of assisting management of image data being captured by generating a file name using related information relating to the image data.

An image capturing device may include: means for inputting image data of an object being captured by the image capturing device; means for obtaining first related information relating to the image data from an outside of the image capturing device upon detecting the inputting of the image data, the outside being at least one of an outside recording medium attached to the object and an outside apparatus connectable with the image capturing device via a network; means for generating at least one of a file name and a folder name using the first related information; and means for storing the image data under the file name being generated by the name generator or within a folder having the folder name being generated by the name generator.

In this example, the means for inputting image data may correspond to the image data input 300, the function circuit 250, or the processor 200. The means for obtaining first related information may correspond to the first related information obtainer 320, the first wireless communication circuit 220, or the processor 220. The means for generating may correspond to the name generator 330, or the processor 200. The means for storing may correspond to the data storage 310, the processor 200, or the image data memory 217.

An image capturing system may be provided, which includes an image capturing device and an outside apparatus. The image capturing device captures image data of an object. The outside apparatus sends first related information relating to the image data to the image capturing device via a network at the time of capturing the image data. When the capturing of the image data is detected, the image capturing device generates a file name or a folder name using the first related information. The image data may be stored under the file name being generated or within a folder having the folder name being generated.

In this example, the image capturing device may correspond to the image capturing device 100, 100A, or 100B. The outside apparatus may correspond to the GPS system including at least one of the GPS satellite 131 and the GPS receiver 130, or the barcode scanner 120.

Advantageously, a method of generating a file name or a folder name may be provided, which includes: detecting capturing of image data of an object; obtaining first related information relating to the image data from an outside of the image capturing device; and generating at least one of the file name and the folder name using the first related information. Storing the image data under the file name being generated or within a folder having the folder name being generated may be additionally performed.

Advantageously, in any one of the above-described examples, the file name or the folder name may include a portion or the entire of the first related information. The first related information may be obtained from the outside of the image capturing device, such as an outside recording medium attached to the object or an outside apparatus connectable with the image capturing device via a network. Examples of the first related information include, but not limited, to satellite location data and satellite time data obtainable from a global positioning system (GPS) satellite, location data of a position of the object that may be estimated from the satellite location data and the satellite time data using a GPS receiver, time data indicating the date or time at which the image data is captured, and identification data obtainable from the outside recording medium attached to the object.

Alternatively or additionally, the file name or the folder name may include a portion or the entire of second related information. The second related information may be obtained from correspondence data indicating the correspondence between the first related information and the second related information. Examples of the second related information include, but not limited to, location name data indicating the name of the position of the object, and object name data indicating the name assigned to the obj ect.

A more complete appreciation of the disclosure and many of the attendant advantages thereof will be readily obtained as the same becomes better understood by reference to the following detailed description when considered in connection with the accompanying drawings, wherein:
FIG. 1 is a schematic block diagram illustrating a structure of an image data management system, according to a comparative example which is not part of the invention;
FIG. 2 is a schematic block diagram illustrating a hardware structure of an image capturing device shown in FIG. 1, according to a comparative example which is not part of the invention;
FIG. 3 is a schematic block diagram illustrating a functional structure of an image capturing device shown in FIG. 1, according to a comparative example which is not part of the invention;
FIG. 4 is a flowchart illustrating operation of generating a file name of image data, according to a comparative example which is not part of the invention;
FIG. 5 is an example illustration of map data storing location data and location name data in a corresponding manner;
FIG. 6 is an example correspondence table storing location data and location name data in a corresponding manner;
FIG. 7 is a flowchart illustrating operation of generating a file name of image data, according to a comparative example which is not part of the invention;
FIG. 8 is a schematic block diagram illustrating a structure of an image data management system, according to a comparative example which is not part of the invention;
FIG. 9 is a schematic block diagram illustrating a hardware structure of an image capturing device shown in FIG. 8, according to a comparative example which is not part of the invention; and
FIG. 10 is a schematic block diagram illustrating a structure of an image data management system, according to an example embodiment of the present invention.

In describing the example embodiments illustrated in the drawings, specific terminology is employed for clarity. However, the disclosure of this patent specification is not intended to be limited to the specific terminology selected and it is to be understood that each specific element includes all technical equivalents that operate in a similar manner. For example, the singular forms "a", "an" and "the" are intended to include the plural forms as well, unless the context clearly indicates otherwise.

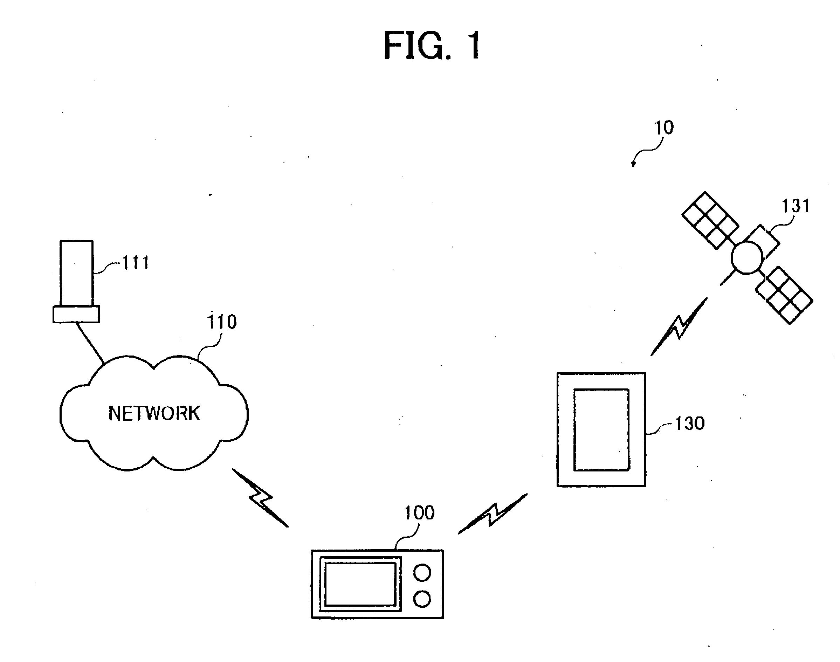

Referring now to the drawings, wherein like reference numerals designate identical or corresponding parts throughout the several views, FIG. 1 illustrates an image data management system 10 according to a comparative example which is not part of the invention.

The image data management system 10 includes an image capturing device 100, a server 111, and a global positioning system (GPS) including a GPS receiver 130 and a GPS satellite 131.

The server 111 may be implemented by any desired device or apparatus connectable to the image capturing device 100 via a network 110, which is capable of providing various information relating to location or time data obtainable by the GPS system to the image capturing device 100, for example, upon receiving a request from the image capturing device 100. In one example, in response to location data of a specific position, which is obtainable through the image capturing device 100 from the GPS system, the server 111 may provide correspondence data indicating the correspondence between the location data of the specific position, and any other kind of data relating to the specific position such as location name data of the specific position. In this example, the location data may include latitude data, longitude data, and/or altitude data. Further, in this example, the location name data may include at least a portion of address indicating the specific position, such as the name of street, city, county, town, region, state, etc., any number or code indicating the specific position such as a ZIP code or a telephone number, or any identification information for identifying the specific position such as the name of a sightseeing spot or a name of a public place located at the specific position. The correspondence data may be provided in various forms such as in the form of map or table.

The network 110 may include any kind of network, such as the Internet, the Intranet, a local area network (LAN), a wired network, or a wireless network. When the wireless network is provided, a relay apparatus, such as a wireless access point (WAP) device, may be provided to allow any apparatus to communicate via the wireless network. Alternatively, any one of the devices shown in FIG. 1 may incorporate a wireless communication circuit to allow communication via the wireless network without the use of relay apparatus.

The GPS system including the GPS satellite 131 and the GPS receiver 130 provides location or time data of a current position to the image capturing device 100. The location or time data of the current position may be used as related information relating to image data to be captured by the image capturing device 100. Alternatively, the location or time data of the current position may be used to derive any other kind of related information relating to image data to be captured by the image capturing device 100. For the descriptive purpose, the related information obtained from the outside of the image capturing device 100, such as the location or time data of the current position obtained from the GPS system, may be referred to as first related information. The related information derived using the first related information may be referred to as second related information.

In one example operation, the GPS satellite 131 sends a signal to the ground, which may be used by the GPU receiver 130 to detect a current position of the GPU receiver 130. More specifically, the GPS satellite 131, which orbits around the earth, transmits a signal containing satellite location data indicating the current position of the satellite 131 and satellite time data indicating the time the signal is transmitted from the satellite 131, for example, at 1.2 GHz and 1.5GHz in two different bands. A plurality of GPS satellites 131 (collectively, referred to as the GPS satellite 131) are available, each of which includes an atomic clock that may be used for detecting the time the signal is transmitted or for synchronization among the plurality of satellites.

The GPS receiver 130 receives a plurality of signals from the GPS satellite 131, and measures the current position of the GPS receiver 130. For example, the GPS receiver 130 detects the time the signal is received by the GSP receiver 130 using its internal clock, and compares the time the signal is transmitted with the time the signal is received to obtain the distance between the GPS receiver 130 and the GPS satellite 131. From the calculated distance, location data indicating the current position of the GPS receiver 130 may be obtained. The GPS receiver 130 provides the location data indicating the current position, such as the longitude data, the latitude data, or the altitude data, to the image capturing device 100. In this example, the GPS receiver 130 sends the location data of the current position to the image capturing device 100 at predetermined timing, for example, every one second.

Although the GPS receiver 130 is provided separately from the image capturing device 100 in FIG. 1, the GPS receiver 130 may be incorporated into the image capturing device 100. In such case, the image capturing device 100 receives the signal containing the satellite location data and the satellite time data from the GPS satellite 131, and estimates a current position of the image capturing device 100 using the GPS receiver 130 in a substantially similar manner as described above. For this reason, the satellite location data and the satellite time data may correspond to the first related information, while the location data of the current position may correspond to the second related information.

Alternatively, in place of the GPS system including the GPS receiver 130 and the GPS satellite 131, any other device, apparatus, or system capable of measuring the current position may be used, such as a laser range finder.

The image capturing device 100 may be implemented by any desired device or apparatus capable of capturing an image of an object as image data. Examples of the image capturing device 100 include, but not limited to, a digital still camera, a digital video camera, a portable phone having the function of capturing image data, a personal digital assistance (PDA) device having the function of capturing image data, a traffic control device having the function of capturing image data, a navigation device having the function of capturing image data, etc. Further, in this example, the image capturing device 100 communicates with any other device shown in FIG. 1 through the wireless network either directly or via the relay apparatus.

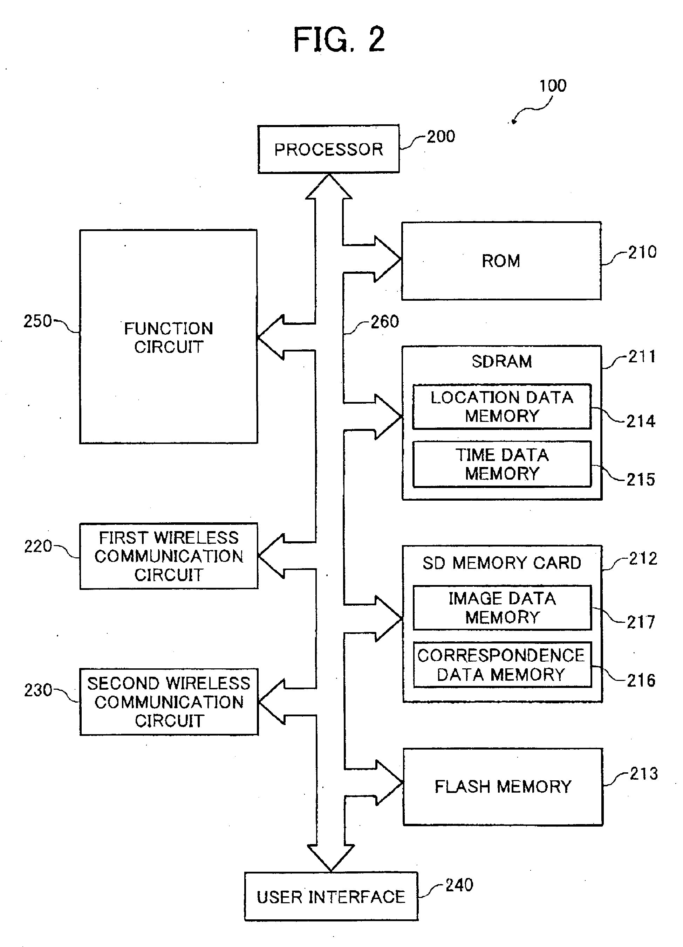

Referring to FIG. 2, an example structure of the image capturing device 100 is explained, which is not part of the invention. The image capturing device 100 includes a processor 200, one or more memories such as a read only memory (ROM) 210, a synchronous dynamic random access memory (SDRAM) 211, a secure digital (SD) memory card 212, and a flash memory 213, a first wireless communication circuit 220, a second wireless communication circuit 230, a user interface 240, and a function circuit 250, which are connected via a communication bus 260.

The processor 200 controls operation of the image capturing device 100 according to a control program, which may be read from the ROM 210 or any other kind of memory or storage. For example, the processor 200 may receive first related information from the GPS system at the time of capturing the image data, generate a file name or a folder name using the first related information or the second related information, and store the image data under the file name or within a folder having the folder name. In this example, the first related information may correspond to location or time data of the current position obtainable from the GPS receiver 130. The second related information may correspond to any other kind of data that may be derived using the location or time data of the current position.

The ROM 210 may store the control program, which causes the processor 200 to perform operation of generating a file name or a folder name using the first or second related information.

The SDRAM 211 may function as a work memory of the processor 200. The SDRAM 211 includes a location data memory 214 and a time data memory 215. The location data memory 214 stores location data indicating the position at which the image data is captured, which may be received from the GPS receiver 130. The time data memory 215 stores time data indicating the time when the image data is captured, which may be received from the GPS receiver 130. The GPS receiver 130 sends the location and time data at predetermined timing as described above referring to FIG. 1. When capturing of the image data is detected, for example, through a shutter button of the user interface 240, the processor 200 receives and stores the location data in the location data memory 214, and the time data in the time data memory 215. The location or time data may be read out by the processor 200 at the time of generating a file name of the image data or a folder name of a file storing the image data.

The SD card memory 212 may store image data in an image data memory 217. The SD card memory 212 may further include a correspondence data memory 216, which stores the location data and location name data in a corresponding manner. The SD memory card 212 may be implemented by any desired memory, which can be attached to or removed from the image capturing device 100. Further, any number of SD memory cards may be provided.

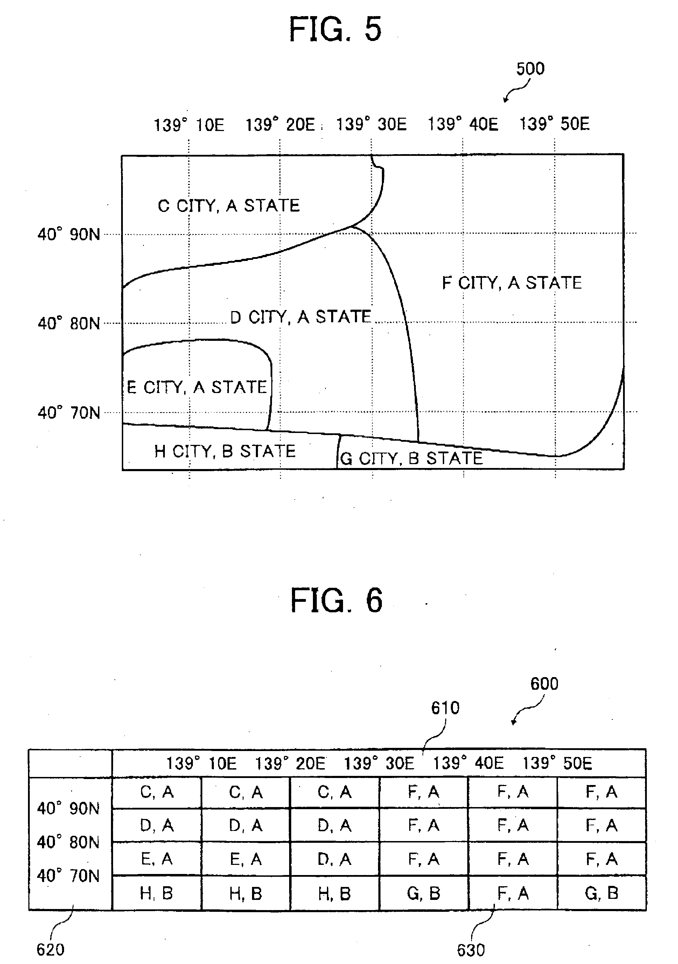

In one example, the correspondence data memory 216 may include a plurality of map data each indicating the correspondence between location data and location name data within a specific geographical area, for example, as illustrated in FIG. 5. In another example, the correspondence data memory 216 may include a plurality of correspondence tables each indicating the correspondence between location data and location name data within a specific geographical area, for example, as illustrated in FIG. 6. In this example, the correspondence table 600 of FIG. 6 may be generated from the map data 500 of FIG. 5. The correspondence table 600 of FIG. 6 includes a latitude filed 610 that may be generated from the latitude data obtainable from the map data 500, a longitude field 620 that may be generated from the longitude data obtainable from the map data 500, and a location name field 630 that may be generated from the location name data obtainable from the map data 500.

For example, upon receiving the location data, such as the latitude data, longitude data, and/or altitude data, of the current position from the GPS system, the processor 200 may obtain one of the plurality of correspondence data files that matches the location data of the current position. For example, when the location data indicates that the position at which the image data is captured has the latitude of 40°75' East and the longitude of 139°25' North, the corresponding location name "D City, A State" may be obtained from any one of the map data 500 of FIG. 5 and the correspondence table 600 of FIG. 6. In such case, in one example, when none of the map data 500 and the correspondence table 600 are not stored in the correspondence memory 216, the processor 200 may obtain the map data 500 from the server 111, convert the map data 500 into the correspondence table 600, and obtain the location name that matches the location data of the specific position.

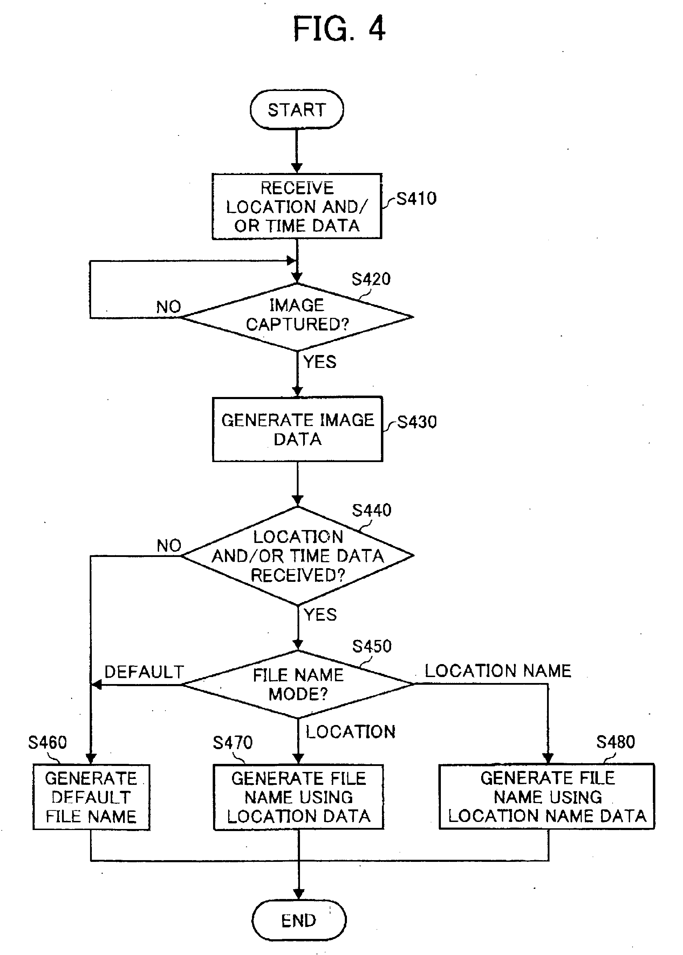

The flash memory 213 may store various setup information regarding the image capturing device 100. For example, as described below referring to FIG. 4, the flash memory 213 may store setup information indicating a file name mode to be used by the image capturing device 100 at the time of generating a file name. Alternatively, the flash memory 213 may store setup information indicating a folder name mode to be used by the image capturing device 100 at the time of generating a folder name. The setup information may be input or selected by the user through the user interface 240.

The first wireless communication circuit 220 controls transmission or reception of data within a short distance. For this reason, the first wireless communication circuit 220 operates at low electric power consumption. For example, the first wireless communication circuit 220 may communicate using the Bluetooth technology or the infrared technology. The first wireless communication circuit 220 may operate at low bands, such as at 2.4 GHz.

The second wireless communication circuit 230 controls transmission or reception of data within a long distance, or transmission or reception of data having a large data size. For this reason, the second wireless communication circuit 230 is capable of communicating at high speeds. For example, the second wireless communication circuit 230 may be implemented by a wireless LAN circuit, for example, using a communication protocol in compliance with the IEEE 802.11a to IEEE 802.11n.

Referring back to FIG. 1, when communicating with the server 111 through the network 110, the image capturing device 100 may use the second wireless communication circuit 230, for example, to transmit image data captured by the image capturing device 100 to store the image data in the server 111. When communicating with the GPS receiver 130, the image capturing device 100 may use the first wireless communication circuit 220, for example, to receive location data or time data of a current position. In this example, the image capturing device 100 receives the location or time data from the GPS receiver 130 through the first wireless communication circuit 220 at predetermined timing, for example, at every one second, when the power is turned on or the corresponding operation mode is set.

Referring to FIG. 2, the user interface 240 may include an output device that outputs the image data, and an input device that inputs a user instruction. For example, the output device may be implemented by a liquid crystal display (LCD) that displays various data, such as the image data or a message to the user. The input device may be implemented by various buttons or keys for inputting the user instruction, such as the shatter button to be pressed when capturing the image data of an object, a power switch that controls on or off of the image capturing device 100, an operation mode dial that allows the user to select one mode from a plurality of modes, etc.

The function circuit 250 provides various functions including, for example, the function of capturing image data using an optical system and a photoelectric converting unit, the function of processing the captured image data such as by adjusting color or resolution, the function of setting date or time, etc.

The image capturing device 100 of FIG. 2 may be implemented in various other ways. For example, the correspondence data memory 216 may not be provided in the SD memory card 212, as long as the correspondence data is obtainable either from an internal memory of the image capturing device 100 or the outside apparatus such as the server 111. In another example, the image data memory 217 may not be provided in the SD memory card 212, as long as the image data can be stored in an internal memory of the image capturing device 100 or the outside apparatus such as the server 111.

In an example operation, the image capturing device 100 generates a file name of image data being captured, or a folder name of a folder storing the image data being captured, using second related information relating to the image data obtainable using the location data received from the GPS system. Upon detecting capturing of the image data, for example, through the user interface 240, the processor 200 searches through correspondence data stored in the correspondence data memory 216 of the SD card memory 212 for correspondence data that matches the location data received from the GPS receiver 130. Once the correspondence data including the location data is identified, the location name data that corresponds to the location data is obtained. The processor 200 generates a file name using the location name data, and assigns the file name to the image data such that the file name being generated is used when storing the image data. Alternatively, the processor 200 may generate a folder name of a folder to store the image data, using the location name data in a substantially manner. When the correspondence data including the location data is not available from the SD card memory 212, the processor 200 causes the second wireless communication circuit 230 to access the server 111, and searches for correspondence data that matches the location data received from the GPS receiver 130.

In addition to or in alternative to using the second related information obtained in a corresponding manner with the location data as described above, in one example, the processor 200 may generate a file name or a folder name using the first related information, i.e., the location data received from the GPS receiver 130.

In addition to or in alternative to using the second related information obtained in a corresponding manner with the location data as described above, in another example, the processor 200 may generate a file name or a folder name using another type of the first related information, i.e., the time data received from the GPS receiver 130 when the image data is captured. For example, in the example case in which first image data and second image data are captured at substantially the same position, the GPS system may output the location data having the same value for the first and second image data. The image capturing device 100 may generate a folder name having the location name that corresponds to the location data, and assigns the folder name to a folder storing the first and second image data. In such case, a file name having the time data indicating the time when the first image data is captured may be assigned to the first image data. A file name having the time data indicating the time when the second image data is captured may be assigned to the second image data. Alternatively, a file name having the location data and the time data may be assigned to the first or second image data.

Further, in this example, the image capturing device 100 may be provided with the function of determining whether the first related information, such as the location or time data, is successfully received at the time of capturing the image data to generate a determination result. When the determination result indicates that the first related information is successfully received, the processor 200 may generate a file name or a folder name using the first related information or the second related information that corresponds to the first related information, as described above. When the determination result indicates that the first related information is not successfully received, the processor 200 may generate an arbitrary file name or folder name according to the naming rule previously defined, or request the user to manually input a file name or a folder name.

Alternatively or additionally, the image capturing device 100 may be provided with the function of generating a file name or a folder name according to the naming rule previously determined, when the file name mode or the folder name mode is set to a default mode.

Since a file name or a folder name having a portion or the entire of related information relating to the image data being captured is assigned to the image data or a folder storing the image data when the image data is being stored, the user may easily recognize the content of the image data from the file name or the folder name.

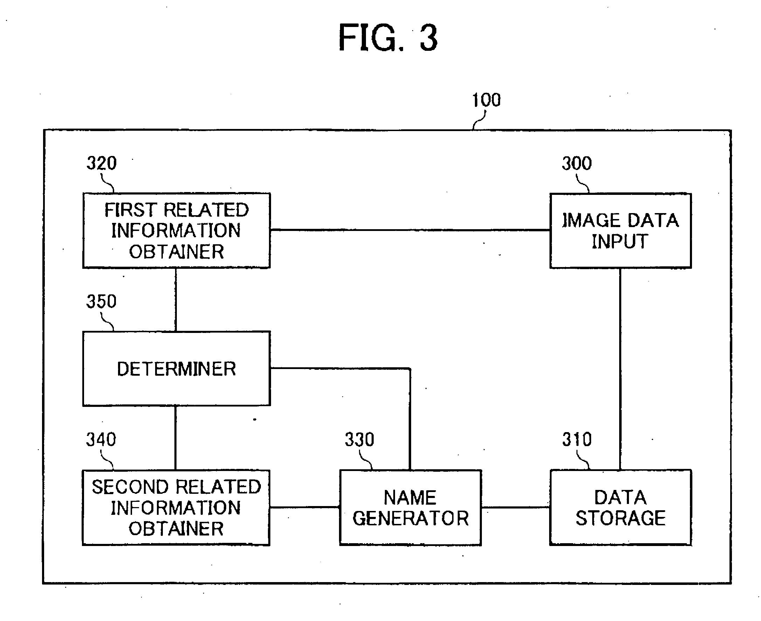

Referring now to FIG. 3, a functional structure of the image capturing device 100 is explained according to a comparative example which is not part of the invention. The image capturing device 100 includes an image data input 300, a data storage 310, a first related information obtainer 320, a name generator 330, a second related information obtainer 340, and a determiner 350.

The image data input 300 inputs image data of an object, which is captured by the image capturing device 100, for example, using the optical system. The data storage 310 stores the image data. The first related information obtainer 320 obtains the first related information from the outside of the image capturing device 100, such as location data or time data received from the GPS system. The second related information obtainer 340 obtains the second related information regarding the image data or the object of the image data that matches the first related information, for example, from a removable recording medium including the SD memory card 212 of FIG. 2 or the server 111 of FIG. 1. The name generator 330 generates a file name to be assigned to the image data or a folder name to be assigned to a folder storing the image data, using the first or second related information. The determiner 350 determines whether the first related information obtainer 320 successfully receives the first related information.

Referring to FIG. 3, once the image data is captured, the image data input 300 inputs the image data, and sends a signal indicating that the image data is captured to the first related information obtainer 320. Upon detecting the signal, the first related information obtainer 320, which communicates with the GPS receiver 130 of FIG. 1, obtains, for example, location data indicating the position of the object of the image data, from the GPS receiver 130. The location data being obtained may be stored in the SDRAM 211 of FIG. 2. The determiner 350 determines whether the first related information is successfully received, for example, by checking the SDRAM 211, to generate a determination result. Alternatively or additionally, the determiner 350 may check a file name mode or a folder name mode currently set by referring to setup information.

When the determination result indicates that the first related information is successfully received, in one example, the determiner 350 may send the first related information to the second related information obtainer 340. The second related information obtainer 340 obtains second related information that matches the first related information, for example, from the SD memory 212 or the server 111. The second related information, such as the location name data that corresponds to the location data, may be sent to the name generator 330. Whether to obtain the second related information may be determined based on the file name mode or the folder name mode.

When the determination result indicates that the first related information is successfully received, in another example, the determiner 350 may send the first related information to the name generator 330. When the determination result indicates that the first related information is received in error, the determiner 350 notifies the name generator 330 that the first related information is not avilable.

When the related information, such as the location data or the location name data, is received, the name generator 330 generates a file name or a folder name using the related information. When it is notified that the first related information is not available, the name generator 330 generates a file name or a folder name according to the naming rule previously determined. The file name or the folder name is sent to the data storage 310 such that the file name or the folder name is associated with the image data being captured. The data storage 310 stores the image data under the file name being generated, or the image data in a folder having the folder name being generated.

Referring now to FIG. 4, operation of generating a file name of image data being captured is explained according to a comparative example which is not part of the invention. The operation of FIG. 4 may be performed when the image capturing device 100 is turned on or switched to the corresponding operation mode.

S410 receives location and/or time data of a current position. In this example, the location data including longitude data and latitude data of the current position is received from the GPS receiver 130.

S420 determines whether the image data of an object is captured. The capturing of the image data may be detected when the shutter button of the user interface 240 is pressed by the user. When it is determined that the image data is captured ("YES" at S420), the operation proceeds to S430. When it is determined that the image data is not captured ("NO" at S420), the operation repeats S420.

S430 generates the image data of the object, and stores the image data temporarily in a memory such as the SDRAM 211 (FIG. 2). At this time, various image processing may be applied by default or according to the user preference, for example, using the function circuit 250 (FIG. 2).

S440 determines whether receiving of the location and/or time data has been successful. When the location and/or time data is successfully received ("YES" at S440), the operation proceeds to S450. When the location and/or time data is not successfully received ("NO" at S440), for example, due to the error in communication, the operation proceeds to S460.

S450 checks for a file name mode previously set by default or according to the user preference. For example, information regarding the file name mode may be stored in the flash memory 213 (FIG. 2) according to a user instruction received through the user interface 240 (FIG. 2). In this example, a file name mode is selected from a default file mode, location mode, and location name mode.

When it is determined that the location/time data is not successfully received at S440 ("NO" at S440), or when it is determined that the default file name mode is selected at S450 ("default" at S450), at S460, the image capturing device 100 generates a default file name. The default file name may include a sequence of characters and/or numbers, which may be determined according to the naming rule previously set. For example, the file name "RIMG0001.jpg" or "R004325.jpg" may be arbitrarily generated.

When it is determined that the location mode is selected at S450 ("location" at S450), at S470, the image capturing device 100 generates a file name using the longitude data and the latitude data, which is obtained at S410. The file name may include a sequence of numbers, which may be derived from the latitude and longitude data. For example, the file name "13910E_4090N.jpg" or "14099E_4132N.jpg" may be generated, using the longitude data and the latitude data. The file name "13910E_4090N.jpg" indicates that the image data is captured at the location specified by the latitude of 139°10' East and the longitude of 40°90' North. The file name "14099E_4132N.jpg" indicates that the image data is captured at the location specified by the latitude of 140°99' East and the longitude of 41°32' North. When more than one image data has the same location data, any desired character, number, or mark may be added to the above-described file name to avoid assignment of the same file name to more than one file. Further, any character, number, or mark may be used in replace of the space "_".

When it is determined that the location name mode is selected at S450 ("location name" at S450), at S480, the image capturing device 100 generates a file name including at least a portion of the location name data. For example, the file name "Alexandria_VA.jpg" or "Washington_Monument.jpg" may be generated using the location name data. The file name "Alexandria_VA.jpg" indicates that the image data is captured in Alexandria, Virginia. The file name "Washington_Monument.jpg" indicates that the image data is captured at the Washington Monument. When more than one image data has the same location data, any desired character, number, or mark may be added to the above-described file name to avoid assignment of the same file name to more than one file. Further, any character, number, or mark may be used in replace of the space "_".

After performing any one of S460, S470, and S480, the operation may proceed to store the image data using the file name generated at S460, S470, or S480, for example, in the SD memory card 212 (FIG. 2) or the server 111 (FIG. 1).

The operation of FIG. 4 may be performed in various other ways. For example, any other kind of file name modes may be used in addition or in alternative to the file name modes described above.

In one example, a time mode may be provided to generate a file name including time data at which the image data is captured. The time data may be obtained at S410 from the GPS system. When the time mode is selected, for example, the file name "20060401.jpg" or "20070101.jpg" may be generated using the time data. The file name "20060401.jpg" indicates that the image data is captured on April 1, 2006. The file name "20070101.jpg" indicates that the image data is captured on January 1, 2007. In this example, the time data may be expressed in any sequential order, which may be previously set according to the user preference.

In another example, a location/time mode may be provided to generate a file name including the latitude data, the longitude data, and the time data. When the location/time mode is selected, for example, the file name "13910E_4090N_20060401.jpg" or "14099E_4132N_20070101.jpg" may be generated using the longitude and latitude data, and the time data. The file name "13910E_4090N_20060401.jpg" indicates that the image data is captured at the location specified by the latitude of 139°10' East and the longitude of40°90' North, on April 1, 2006. The file name "14099E_4132N_20070101.jpg" indicates that the image data is captured at the location specified by the latitude of 140°99' East and the longitude of 41°32', on January 1, 2007.

In another example, a location name/time mode may be provided to generate a file name including at least a portion of the location name data and time data indicating the time at which the image data is captured. When the location name/time mode is selected, for example, the file name "Alexandria_VA_20060401.jpg" or "Washington_Monument_20070101.jpg" may be generated using the location name data and the time data. The file name "Alexandria_VA_20060401.jpg" indicates that the image data is captured in Alexandria, Virginia, on April 1, 2006. The file name "Washington_Monument_20070101.jpg" indicates that the image data is captured at the Washington Monument on January 1, 2007.

The above-described time data includes date information indicating the date at which the image data is captured. Alternatively or additionally, the time data may include time information indicating any one of hour, minute, or second at which the image data is captured. Further, any one of the above-described file names may be added with additional character, number or mark to avoid assignment of the same file name to more than one file. The format of any one of data to be included in the file name or folder name may be previously determined according to the user preference.

The operation of FIG. 4 describes the example case of generating a file name using related information. The operation of generating a folder name to store image data may be performed in a substantially similar manner as described above referring to FIG. 4.

For example, when first image data and second image data are captured at substantially the same position having the same location data, a folder name including the location name corresponding to the location data may be generated, and assigned to a folder storing the first image data and the second image data. Additionally, a file name including the time data at which the first image data is captured may be generated, and assigned to the first image data. A file name including the time data at which the second image data is captured may be generated, and assigned to the second image data.

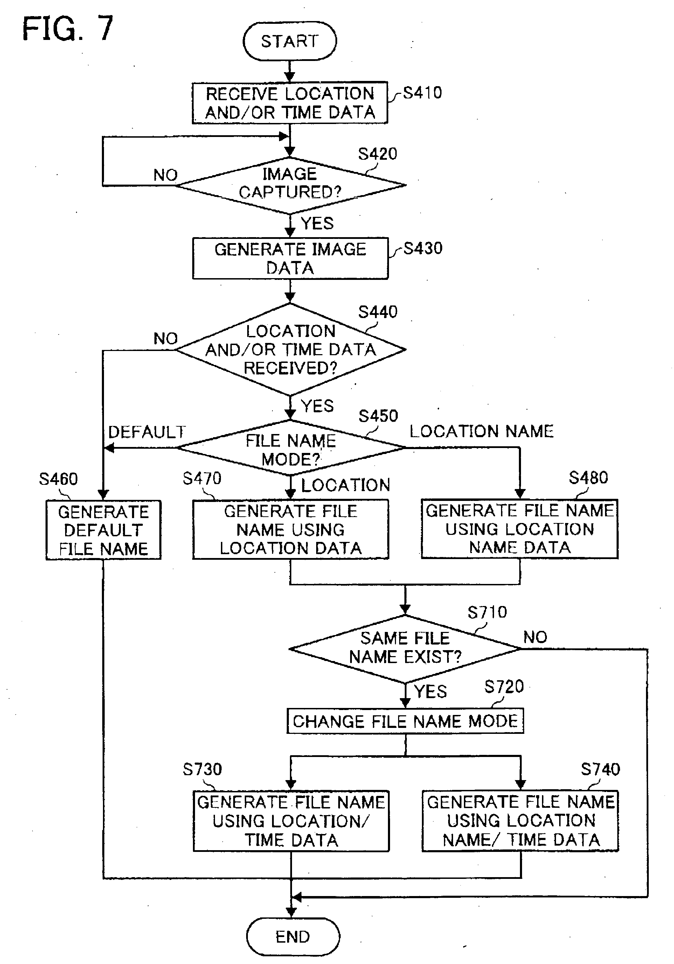

Referring now to FIG. 7, operation of generating a file name of image data being captured is explained according to an example embodiment of the present invention. The operation of FIG. 7 may be performed in a substantially similar manner as described above referring to FIG. 4. The differences include the addition of S710, S720, S730, and S740. Further, in this example, S410 receives the location data and the time data from the GPS system.

S710 determines whether the file name generated at S470 or S480 has been assigned to image data previously stored. When it is determined that the same file name has been assigned to the other image data ("YES" at S710), the operation proceeds to S720. When it is determined that the same file name has not been assigned to the other image data ("NO" at S710), the operation ends.

S720 changes the file name mode previously determined, which is obtained at S450, to another file name mode that requires the use of any other kind of data in addition to the location data used at S470 or the location name data used at S480. In this example, the file name mode is changed such that the time data, which may be obtained at S410, is additionally used to generate the file name. Specifically, when it is determined that the "location" mode is selected at S450, the file name mode is changed to the location/time mode, and the operation proceeds to S730. When it is determined that the "location name" mode is selected at S450, the file name mode is changed to the location name/time mode, and the operation proceeds to S740.

At S730, the image capturing device 100 generates a file name using the longitude data, the latitude data, and the time data.

At S740, the image capturing device 100 generates a file name using the location name data and the time data.

After performing any one of S460, S730, and S740, the operation may proceed to store the image data using the file name generated at S460, S730, and S740, for example, in the SD memory card 212 (FIG. 2) or the server 111 (FIG. 1).

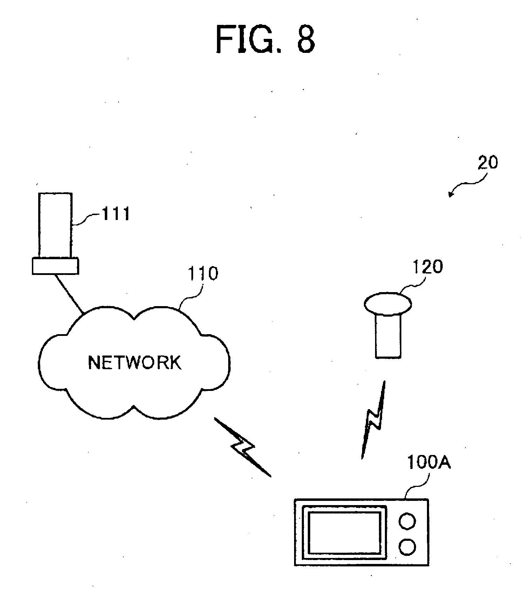

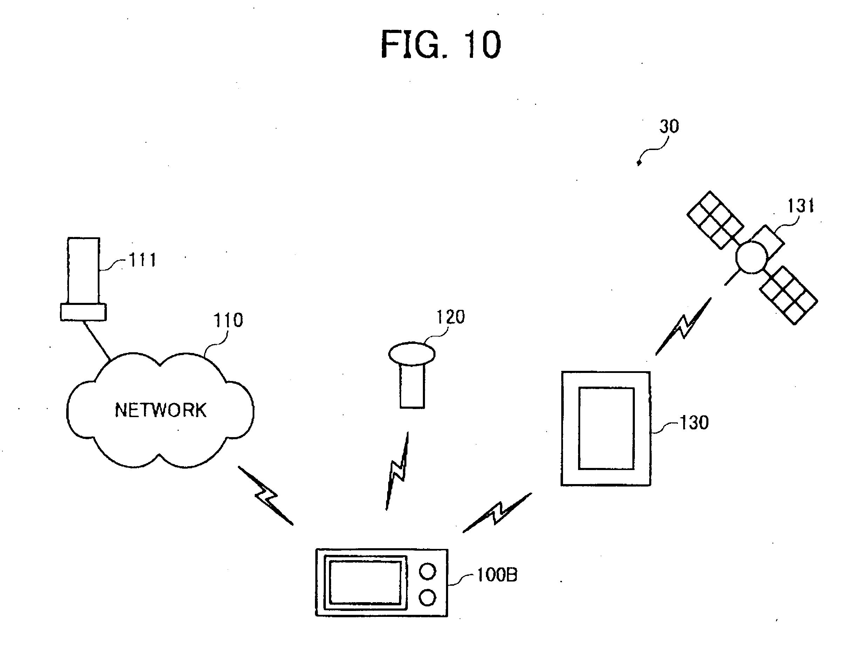

The image data management system 10 of FIG. 1 may be implemented in various other ways, depending on the type of data to be managed by the image data management system 10. For the illustrative purpose, an image data management system 20 of FIG. 8 and an image data management system 30 of FIG. 10 are described below.

Referring now to FIG. 8, the image data management system 20 is explained according to a comparative example which is not part of the present invention. The image data management system 20 includes an image capturing device 100A, the server 111, and a barcode scanner 120.

The server 111 of FIG. 8 may be substantially similar in function or operation to the server 111 of FIG. 1, except for the type of information being managed. Instead of providing various information relating to location or time data obtainable by the GPS system, the server 111 may provide various product information relating to barcode data obtainable by the barcode scanner 120, to the image capturing device 100A, upon receiving a request from the image capturing device 100A. In one example, in response to barcode data of a specific product, which is obtainable through the image capturing device 100A from the barcode scanner 120, the server 111 may provide correspondence data indicating the correspondence between the barcode data of the specific product, and any other kind of data relating to the specific product such as product name data, price data, manufacture place data, etc. The correspondence data may be provided in various forms such as in the form of table. In this example, the barcode data may correspond to first related information, while the other kind of data obtainable using the barcode data may correspond to second related information.

The network 110 of FIG. 8 may be substantially similar in function or operation to the network 110 of FIG. 1.

The barcode scanner 120 reads barcode data from a barcode, which may be attached on a specific product, and sends the barcode data to the image capturing device 100A. Alternatively, the barcode data may be used to derive any other kind of related information relating to image data to be captured by the image capturing device 100A. In this example, the barcode scanner 120 may be provided with the function of communicating with the image capturing device 1 00A via the wireless network.

Alternatively, the barcode scanner 120 may be incorporated into the image capturing device 100A. In such case, the image capturing device 100A obtains the first related information, i.e., the barcode data, directly from the barcode attached to the specific product. In such case, the barcode attached to the specific product may be viewed as a recording medium storing the barcode data.

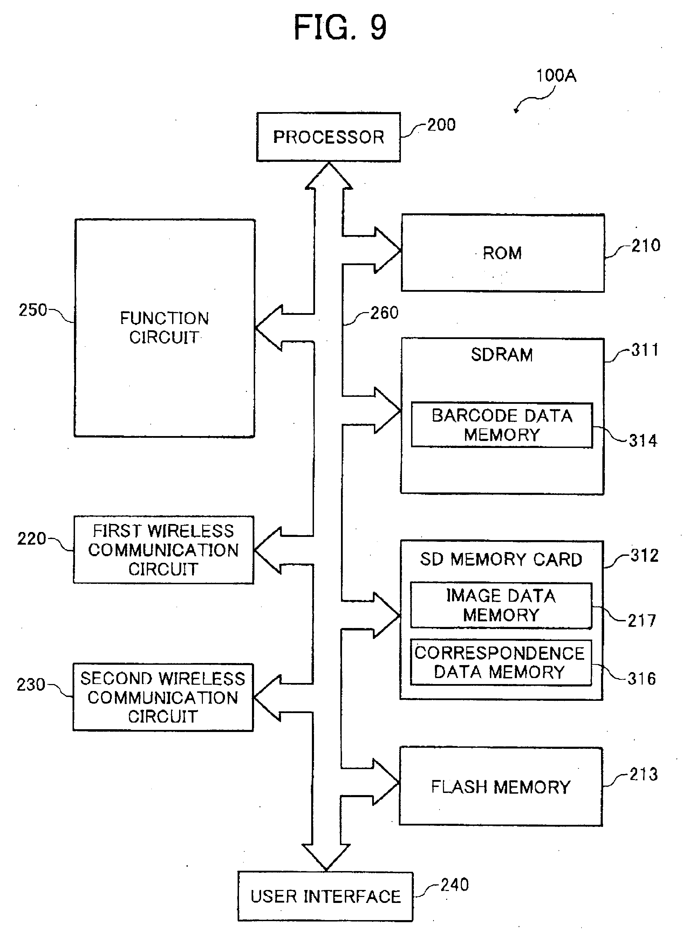

The image capturing device 100A of FIG. 8 may be substantially similar in function or operation to the image capturing device 100 of FIG. 1, except for the type of information being managed. Instead of receiving the location or time data from the GPS system, the image capturing device 100A receives the barcode data from the barcode scanner 120. For this reason, as illustrated in FIG. 9, the SDRAM 211 (FIG. 2) including the location data memory 214 and the time data memory 215 may be replaced by a SDRAM 311 (FIG. 9) including a barcode data memory 314 storing the barcode data received from the barcode scanner 120. Further, the SD memory card 212 (FIG. 2) storing the correspondence data memory 216 may be replaced by a SD memory card 312 (FIG. 9) storing a correspondence data memory 316. The correspondence data memory 316 may store correspondence data, which indicates the correspondence between the barcode data and product information relating to the product identified by the barcode data. For example, the correspondence data may be generated in the form of table, which stores a barcode field and a product name field in a corresponding manner. Further, a plurality of correspondence data each including the barcode data and the product name data for a specific product type may be stored.

In this example described referring to FIG. 8 or 9, the image capturing device 100A may be implemented by, for example, a digital still camera, a digital video camera, a portable phone having the function of capturing image data, a PDA device having the function of capturing image data, a computer system having the function of capturing image data, etc.

In an example operation, the image capturing device 100A generates a file name of image data being captured, or a folder name of a folder storing the image data being captured, using second related information relating to the image data obtainable using the barcode data received from the barcode scanner 120. Upon detecting capturing of the image data, for example, through the user interface 240, the processor 200 searches through correspondence data stored in the correspondence data memory 316 of the SD card memory 312 for correspondence data that matches the barcode data received from the barcode scanner 120. Once the correspondence data including the barcode data is identified, the product name data that corresponds to the barcode data is obtained. The processor 200 generates a file name using the product name data, and assigns the file name to the image data such that the file name being generated is used when storing the image data. Alternatively, the processor 200 may generate a folder name of a folder to store the image data, using the product name data in a substantially similar manner. When the correspondence data including the barcode data is not avilable from the SD card memory 312, the processor 200 causes the second wireless communication circuit 230 to access the server 111, and searches for correspondence data that matches the barcode data received from the barcode scanner 120.

When generating a file name or a folder name using the barcode name data or any other related information obtainable using the barcode name data, the image capturing device 100A of FIG. 9 may operate in a substantially similar manner as described above referring to FIG. 4 or 7. In this example, however, the barcode data is obtained in replace of the location and/or time data. Further, the second related information corresponds to any kind of information relating to a specific product identified by the barcode data. Further, a file or folder name mode may be selected from the default mode, a barcode mode, and a product name mode. The barcode mode generates a file name or a folder name using the barcode data. The product name mode generates a file name or a folder name using the product name data. In addition or in alternative to any one of the above-described modes, any other kind of modes may be provided, for example, a barcode/product name mode to generate a file name or a folder name using the barcode data and the product name data.

In addition or in place of the barcode scanner 120, any desired device or apparatus capable of obtaining identification data of an object may be used, including, for example, integrated circuit (IC) chip reader, radio-frequency identification (RFID) tag reader, etc.

Referring now to FIG. 10, the image data management system 30 is explained according to an example embodiment of the present invention. The image data management system 30 includes an image capturing device 100B, the server 111, the barcode scanner 120, and the GPS system including the GPS receiver 130 and the GPS satellite 131.

The server 111 of FIG. 10 may be provided with the function of the server 111 of FIG. 1 and the server 111 of FIG. 8. Specifically, the server 111 is capable of providing various information relating to location or time data obtainable by the GPS system, and various information relating to barcode data obtainable by the barcode scanner 120, to the image capturing device 100B, upon receiving a request from the image capturing device 100B.

The network 110 of FIG. 10 may be substantially similar in function or operation to the network 110 of FIG. 1 or 8. The barcode scanner 120 of FIG. 10 may be substantially similar in function or operation to the barcode scanner 120 of FIG. 8. The GPS system of FIG. 10 may be substantially similar in function or operation to the GPS system of FIG. 1.

The image capturing device 100B of FIG. 10 may be provided with the function of the image capturing device 100 of FIG. 1 and the image capturing device 100A of FIG. 8. Specifically, the image capturing device 100B is capable of generating a file name or a folder name using at least one of the first related information and the second related information. The first related information may be selected from the satellite location data, the satellite time data, the location data of a specific position, the time data of the specific position, the barcode data, or any data obtainable from the GPS system or the barcode scanner 120. The second related information may be selected from the location name data, the product name data, or any other kind of data obtainable from correspondence data using the first related information.

The image data system 30 of FIG. 10 is implemented by a distribution management system, which manages distribution of a specific product from one location to another location. In such case, the image capturing device 100B generates a file name of image data of a specific product, using the product name data and the location or time data. By capturing the image data of the specific product at more than two locations, the specific product may be easily monitored while being distributed from one location to another location. Further, such information regarding distribution of the specific product may be used to analyze a distribution route or channel.

Numerous additional modifications and variations are possible in light of the above teachings. It is therefore to be understood that within the scope of the appended claims, the disclosure of this patent specification may be practiced in ways other than those specifically described herein.

For example, elements and/or features may be combined with each other and/or substituted for each other within the scope of this disclosure and appended claims.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, involatile memory cards, ROM (read-only-memory), etc.

Alternatively, any one of the above-described and other methods of the present invention may be implemented by ASIC, prepared by interconnecting an appropriate network of conventional component circuits or by a combination thereof with one or more conventional general purpose microprocessors and/or signal processors programmed accordingly.

## Claims

1. A system (30) for monitoring a product while being distributed from one location to another location, the system comprising an image capturing device (100B), a GPS receiver and a barcode scanner;
the image capturing device comprising:
• means (200, 250, 300) for inputting image data of the distributable product being captured by the image capturing device (100B) at different locations;
• means (200, 330) for generating a film name; and
• means for storing the image data under the file name being generated by the generating means (200, 330); wherein
the GPS receiver is for obtaining location data indicating the current position of the GPS receiver; and
the barcode scanner (120) is configured to scan a barcode for obtaining barcode data from a barcode attached to the product distributable from one location to another location,
wherein the barcode scanner (120) is arranged in the image capturing device or outside the image capturing device and wherein the GPS receiver is incorporated in the image capturing device or provided separately from the image capturing device, wherein the image capturing device further comprises:
means (340) for obtaining second related information relating to the image data that matches the first related information, wherein the barcode data and the location data correspond to the first related information and wherein location name data and product name data correspond to the second related information, wherein the second related information is obtained from correspondence data indicating the correspondence between the first related information and the second related information; and
wherein the means for generating generates the file name using the product name data and the location name data.

2. The system according to claim 1, the image capturing device further comprising:
means (350) for determining whether the first related information is successfully obtained from the barcode scanner arrange outside the image capturing device via a network to generate a determination result.

3. The system according to claim 1 or 2, wherein the image capturing device (100A; 100B) comprises a correspondence data memory (316) configured to store the correspondence data.

4. The system (20; 30) according to claim 1, further comprising:
a server (111) connected with the device (100A; 100B) via a network (110),
wherein the image capturing device (100A; 100B) is further configured to access to the server (111) and search for correspondence data that matches the barcode data received from the barcode scanner (120), when the correspondence data including the barcode data is not available from a correspondence data memory (316) of the device (100A; 100B), wherein the correspondence data memory (316) is configured to store the correspondence data.

5. A method for monitoring a product while being distributed from one location to another location by means of a system, the system comprising an image capturing device (100B), a GPS receiver and a barcode scanner;
the method comprising the following steps:
• inputting image data of the distributable product being captured by the image capturing device (100B) at different locations;
• generating a file name; and
• storing the image data under the file name being generated by the generating means (200, 330); wherein
obtaining location data indicating the current position of the GPS receiver by means of the GPS receiver; and
scanning, with the barcode scanner, a barcode for obtaining barcode data from a barcode attached to the product distributable from one location to another location;
obtaining second related information relating to the image data that matches the first related information, wherein the barcode data and the location data correspond to the first related information and wherein location name data and product name data correspond to the second related information, wherein the second related information is obtained from correspondence data indicating the correspondence between the first related information and the second related information; and
wherein the file name is generated using the product name data and the location name data.

6. The method according to claim 5, further comprising:
accessing to a server (111) connected to the image capturing device (100A; 100B) via a network (110), and searching for correspondence data that matches the barcode data received from the barcode scanner (120), when the correspondence data including the barcode data is not available from a correspondence data memory (316) of the image capturing device (100A; 100B) storing the correspondence data.

7. The method according to claim 6, further comprising:
determining whether the obtaining the first related information is successfully performed to generate a determination result, wherein the generating is not performed when the determination result indicates that the obtaining the first related information is not successfully performed.

## Patentansprüche

1. System (30) zum Überwachen eines Produkts, während es von einem Ort zu einem weiteren Ort verteilt wird, wobei das System eine Bildaufnahmevorrichtung (100B), einen GPS-Empfänger und einen Strichcode-Scanner umfasst; wobei
die Bildaufnahmevorrichtung umfasst:
- Mittel (200, 250, 300), um Bilddaten des verteilbaren Produkts, die durch die Bildaufnahmevorrichtung (100B) an verschiedenen Orten aufgenommen werden, einzugeben;
- Mittel (200, 330), um einen Filmnamen zu erzeugen; und
- Mittel, um die Bilddaten unter dem Dateinamen zu speichern, der durch die Erzeugungsmittel (200, 330) erzeugt wird; wobei
der GPS-Empfänger dazu dient, Ortsdaten zu erhalten, die die momentane Position des GPS-Empfängers angeben; und
der Strichcode-Scanner (120) konfiguriert ist, um einen Strichcode zu scannen, um Strichcode-Daten von einem Strichcode, der an dem von einem Ort zu einem weiteren Ort verteilbaren Produkt befestigt ist, zu erhalten,
der Strichcode-Scanner (120) in der Bildaufnahmevorrichtung oder außerhalb der Bildaufnahmevorrichtung angeordnet ist und der GPS-Empfänger in die Bildaufnahmevorrichtung eingebaut ist oder getrennt von der Bildaufnahmevorrichtung vorgesehen ist, wobei die Bildaufnahmevorrichtung ferner umfasst:
Mittel (340), um zweite verwandte Informationen zu erhalten, die mit den Bilddaten in Beziehung stehen, die mit den ersten verwandten Informationen in Übereinstimmung sind, wobei die Strichcode-Daten und die Ortsdaten den ersten verwandten Informationen entsprechen und wobei die Ortsnamendaten und die Produktnamendaten den zweiten verwandten Informationen entsprechen, wobei die zweiten verwandten Informationen aus Korrespondenzdaten erhalten werden, die die Korrespondenz zwischen den ersten verwandten Informationen und den zweiten verwandten Informationen angeben; und
wobei die Mittel zum Erzeugen den Dateinamen unter Verwendung der Produktnamendaten und der Ortsnamendaten erzeugen.

2. System nach Anspruch 1, wobei die Bildaufnahmevorrichtung ferner umfasst:
Mittel (350), um zu bestimmen, ob die ersten verwandten Informationen von dem Strichcode-Scanner, der außerhalb der Bildaufnahmevorrichtung angeordnet ist, über ein Netz erfolgreich erhalten worden sind, um ein Bestimmungsergebnis zu erzeugen.

3. System nach Anspruch 1 oder 2, wobei die Bildaufnahmevorrichtung (100A; 100B) einen Korrespondenzdatenspeicher (316) umfasst, der konfiguriert ist, um die Korrespondenzdaten zu speichern.

4. System (20; 30) nach Anspruch 1, das ferner umfasst:
einen Server (111), der mit der Vorrichtung (100A; 100B) über ein Netz (110) verbunden ist,
wobei die Bildaufnahmevorrichtung (100A; 100B) ferner konfiguriert ist, um auf den Server (111) zuzugreifen und um nach Korrespondenzdaten zu suchen, die mit den Strichcode-Daten übereinstimmen, die von dem Strichcode-Scanner (120) empfangen werden, wenn die die Strichcode-Daten enthaltenden Korrespondenzdaten von dem Korrespondenzdaten-Speicher (316) der Vorrichtung (100A; 100B) nicht verfügbar sind, wobei der Korrespondenzdatenspeicher (316) konfiguriert ist, um die Korrespondenzdaten zu speichern.

5. Verfahren zum Überwachen eines Produkts, während es von einem Ort zu einem weiteren Ort mittels eines Systems verteilt wird, wobei das System eine Bildaufnahmevorrichtung (100B), einen GPS-Empfänger und einen Strichcode-Scanner umfasst;
wobei das Verfahren die folgenden Schritte umfasst:
- Eingeben von Bilddaten des verteilbaren Produkts, die durch die Bildaufnahmevorrichtung (100B) an verschiedenen Orten aufgenommen werden;
- Erzeugen eines Dateinamens; und
- Speichern der Bilddaten unter dem Dateinamen, der durch die Erzeugungsmittel (200, 330) erzeugt wird; wobei
Ortsdaten, die die momentane Position des GPS-Empfängers angeben, mittels des GPS-Empfängers erhalten werden; und
ein Strichcode mit dem Strichcode-Scanner gescannt wird, um Strichcode-Daten von dem Strichcode zu erhalten, der an dem von einem Ort zu einem weiteren Ort verteilbaren Produkt befestigt ist;
zweite verwandte Informationen, die mit den Bilddaten in Beziehung stehen, die mit den ersten verwandten Informationen übereinstimmen, erhalten werden, wobei die Strichcode-Daten und die Ortsdaten den ersten verwandten Informationen entsprechen, und wobei Ortsnamendaten und Produktnamendaten den zweiten verwandten Informationen entsprechen, wobei die zweiten verwandten Informationen aus Korrespondenzdaten erhalten werden, die der Korrespondenz zwischen den ersten verwandten Informationen und den zweiten verwandten Informationen entsprechen; und
der Dateiname unter Verwendung der Produktnamendaten und der Ortsnamendaten erzeugt wird.

6. Verfahren nach Anspruch 5, das ferner umfasst:
Zugreifen auf einen Server (111), der mit der Bildaufnahmevorrichtung (100A, 100B) verbunden ist, über ein Netz (110), und Suchen nach Korrespondenzdaten, die mit den von dem Strichcode-Scanner (120) empfangenen Strichcode-Daten übereinstimmen, wenn die Korrespondenzdaten, die die Strichcode-Daten enthalten, aus einem Korrespondenzdatenspeicher (316) der Bildaufnahmevorrichtung (100A; 100B), der die Korrespondenzdaten speichert, nicht verfügbar sind.

7. Verfahren nach Anspruch 6, das ferner umfasst:
Bestimmen, ob die ersten verwandten Informationen erfolgreich erhalten worden sind, um ein Bestimmungsergebnis zu erzeugen, wobei die Erzeugung nicht ausgeführt wird, wenn das Bestimmungsergebnis angibt, dass die ersten verwandten Informationen nicht erfolgreich erhalten worden sind.

## Revendications

1. Système (30) pour surveiller un produit lors de sa distribution d'un emplacement à un autre, le système comportant un dispositif de capture d'images (100B), un récepteur GPS et un scanner de codes-barres ;
le dispositif de capture d'images comportant :
• un moyen (200, 250,300) pour entrer des données d'image du produit à distribuer capturées par le dispositif de capture d'images (100B) en différents emplacements ;
• un moyen (200, 330) pour générer un nom de fichier ; et
• un moyen pour mémoriser les données d'images sous le nom de fichier généré par le moyen de génération (200, 330) ; dans lequel
le récepteur GPS est conçu pour obtenir des données d'emplacement indiquant la position présente du récepteur GPS ; et
le scanner de codes-barres (120) est configuré pour balayer un code-barres afin d'obtenir des données de codes-barres à partir d'un code-barres joint au produit à distribuer depuis un emplacement à un autre,
dans lequel le scanner de codes-barres (120) est disposé dans le dispositif de capture d'images ou à l'extérieur du dispositif de capture d'images et dans lequel le récepteur GPS est incorporé dans le dispositif de capture d'images prévu séparément du dispositif de capture d'images, dans lequel le dispositif de capture d'images comporte en outre :
un moyen (340) pour obtenir une seconde information associée ayant trait aux données d'image qui correspond à la première information associée, dans lequel les données de code-barres et les données d'emplacement correspondent à la première information associée et dans lequel les données de nom d'emplacement et les données de nom de produit correspondent à la seconde information associée, dans lequel la seconde information associée est obtenue à partir de données de correspondance indiquant la correspondance entre la première information associée et la seconde information associée ; et
dans lequel le moyen de génération génère le nom de fichier en utilisant les données de nom de produit et les données de nom d'emplacement.

2. Système selon la revendication 1, le dispositif de capture d'images comportant en outre :
un moyen (350) pour déterminer si la première information associée est obtenue avec succès à partir du scanner de codes-barres disposé à l'extérieur du dispositif de capture d'images par l'intermédiaire d'un réseau pour générer un résultat de détermination.

3. Système selon la revendication 1 ou 2, dans lequel le dispositif de capture d'images (100A ; 100B) comporte une mémoire de données de correspondance (316) configurée pour mémoriser les données de correspondance.

4. Système (20 ; 30) selon la revendication 1, comportant en outre :
un serveur (111) relié au dispositif (100A ; 100B) par l'intermédiaire d'un réseau (110),
dans lequel le dispositif de capture d'images (100A ; 100B) est en outre configuré pour accéder au serveur (111) et rechercher les données de correspondance qui correspondent aux données de code-barres reçues depuis le scanner de codes-barres (120), lorsque les données de correspondance comprenant les données de code-barres ne sont pas disponibles depuis une mémoire de données de correspondance (316) du dispositif (100A ; 100B), dans lequel la mémoire de données de correspondance (316) est configurée pour mémoriser les données de correspondance.

5. Procédé pour surveiller un produit lors de sa distribution d'un emplacement à un autre au moyen d'un système, le système comportant un dispositif de capture d'images (100B), un récepteur GPS et un scanner de codes-barres ;
le procédé comportant les étapes suivantes :
• l'entrée de données d'image du produit à distribuer capturées par le dispositif de capture d'images (100B) en différents emplacements ;
• la génération d'un nom de fichier ; et
• la mémorisation des données d'image sous le nom de fichier généré par le moyen de génération (200, 330) ; dans lequel
on obtient des données d'emplacement indiquant la position effective du récepteur GPS au moyen du récepteur GPS ; et
on effectue un balayage, grâce au scanner de codes-barres, d'un code-barres pour obtenir des données de codes-barres à partir d'un code-barres joint au produit à distribuer d'un emplacement à un autre ;
on obtient une seconde information associée ayant trait aux données d'image qui correspondent à la première information associée, où les données de code-barres et les données d'emplacement correspondent la première information associée et où des données de nom d'emplacement et les données de nom de produit correspondent à la seconde information associée, où la seconde information associée est obtenue à partir des données de correspondance indiquant la correspondance entre la première information associée et la seconde information associée ; et
dans lequel le nom de fichier est généré en utilisant les données de nom de produit et les données de nom d'emplacement.

6. Procédé selon la revendication 5, comportant en outre :
l'accès à un serveur (111) relié au dispositif de capture d'images (100A ; 100B) par l'intermédiaire d'un réseau (110), et la recherche de données de correspondance qui correspondent aux données de code-barres reçues depuis le scanner de codes-barres (120), lorsque les données de correspondance comprenant les données de code-barres ne sont pas disponibles à partir d'une mémoire de données de correspondance (316) du dispositif de capture d'images (100A ; 100B) mémorisant les données de correspondance.

7. Procédé selon la revendication 6, comportant en outre :
la détermination si l'obtention de la première information associée est effectuée avec succès pour générer un résultat de détermination, dans lequel la génération n'est pas effectuée lorsque le résultat de détermination indique que l'obtention de la première information associée n'est pas effectuée avec succès.
